# EUROPEAN PATENT APPLICATION

(11) **EP 4 471 106 A1**
(43) Date of publication of application: **04.12.2024**
(21) Application number: 22923138.6
(22) Date of filing: 02.06.2022
(51) Int. Cl.: C09K 11/06, G01N 21/64

(54) **AIE FLUORESCENT PROBE COMPOSITION, CMC MEASUREMENT METHOD AND DEVICE FOR SURFACTANT SOLUTION, AND CMC DETERMINATION METHOD AND DEVICE**

(30) Priority: 30.01.2022 CN 202210113645
(71) Applicant: Moon House (China) Co., Ltd., Guangzhou, Guangdong 510700 (CN)
(72) Inventor: JIANG, Zan, Guangzhou, Guangdong 510700 (CN); ZHENG, Xianglong, Guangzhou, Guangdong 510700 (CN)
(74) Representative: Vossius & Partner Patentanwälte Rechtsanwälte mbB
(86) International application number: PCT/CN2022/096821
(87) International publication number: WO 2023/142326

(57) **Abstract**

The present invention provides an aggregation-induced emission (AIE) fluorescent probe composition for measuring a critical micelle concentration (CMC) of a surfactant solution. The AIE fluorescent probe composition comprises a probe compound and an auxiliary agent. The probe compound is a hydrophobic AIE molecule, and the auxiliary agent is at least one organic solvent expressed by the following general formula (1): (R)ₙ-X (1), where R is a substituted or unsubstituted linear or branched alkyl group having 3-10 carbon atoms; n is an integer of 1 or 2, and when n is 2, two R groups can be the same or different; and X is any polar group selected from hydroxyl, amino, cyano, halogen, acylamino, carbonyl, aldehyde, ester, and ether groups. The present invention further provides a method and device for measuring a CMC of a surfactant solution using the AIE fluorescent probe composition described above, and a method and device for CMC determination based on an AIE fluorescent probe.

## Description

### Technical Field

The present invention relates to an AIE fluorescent probe composition, a method and a device for measuring a CMC of a surfactant solution using the AIE fluorescent probe composition, and a method and a device for CMC determination based on an AIE fluorescent probe.

### Background Art

Critical micelle concentration (CMC) is an important dividing line for properties of a surfactant solution. Before and after the CMC, the surfactant solution may have significant changes in many physical and chemical properties such as surface tension, light scattering, molar conductivity, density, osmotic pressure, and solubilization action.

Conventional methods for CMC detection include a surface tension-based method, an electrical conductivity-based method, fluorescent spectrometry (PL), etc. However, these methods are somewhat limited in practical use. For example, the surface tension-based method requires a series of complex operations when measuring a CMC. The electrical conductivity-based method fails to detect nonionic surfactants and surfactants with low electrical conductivity. The PL has the problems of low sensitivity, relying on high-accuracy testing instruments, etc.

In recent years, it has been found that some organic molecules do not emit light in a solution, but may have greatly increased luminous intensity in an aggregation state or as a solid thin film. Because the property of enhanced light emission is caused by aggregation of molecules, this phenomenon is defined as "aggregation-induced emission" (AIE).

Because of the AIE characteristic, AIE fluorescent probes made from organic molecules exhibiting the above-mentioned AIE phenomenon can measure the CMC of a surfactant solution simply, rapidly and efficiently without the aid of precise instruments, and thus can be effectively used in various fields, e.g., used for monitoring a surfactant content in a washing aqueous solution in washing industries, which is of practical guiding significance.

Prototype AIE molecules include, e.g., common tetraphenylethylene (TPE), hexaphenylsilole (HPS), and distyrenylanthracene (DSA), which have the advantages of high quantum yield, high chemical stability and light stability and the like in a solid state. However, the hydrophobicity of unsubstituted prototype AIE molecules limits their use in waterborne systems such as surfactant solutions. Non-patent document 1 reported that hydrophobic AIE molecules were firstly dissolved in a volatile organic solvent such as n-hexane, then added to a surfactant solution and mixed by ultrasonic wave and the AIE characteristic was exhibited after the complete evaporation of the easily soluble organic solvent. However, since this method includes the steps of ultrasonic mixing, organic solvent evaporation and the like, it is inconvenient to use in an actual environment.

To overcome the problem of the hydrophobicity of an AIE fluorescent probe, current research ideas mainly focus on introducing a charged functional group such as ammonium group or sulfonic acid group into the hydrophobic AIE molecular structure to improve its hydrophilicity. For example, in patent document 1, a series of hydrophilic AIE fluorescent probes were prepared. Such AIE fluorescent probes each having a benzoquinoline structural unit as a parent and added with the sulfonic acid group as a major water-soluble group were able to obtain the CMC of a surfactant solution by observing an abrupt change in fluorescence occurrence from no fluorescence to strongest fluorescence under an ultraviolet lamp at a wavelength of 365 nm. Patent document 2 reported the synthesis of an amphipathic molecule formed by introducing a hydrophilic unit into the hydrophobic skeleton of an HPS molecule or a TPE molecule, and use thereof in the field of biology. However, in these methods, the synthesis techniques of deriving hydrophilic AIE molecules from unsubstituted hydrophobic AIE molecules are difficult and high in production cost, and cannot be universally applicable to the industrial field.

### Prior Art Documents

### Non-Patent Document

Non-patent document 1: "Detection of the critical micelle concentration of cationic and anionic surfactants based on aggregation-induced emission property of hexaphenylsilole derivatives" TANG Li et.al, Sci China Ser B-Chem, Jun. 2009, vol. 52, No. 6, 755-759

### Patent Documents

Patent document 1: CN110028446A
Patent document 2: CN106566532A

### Summary of the Invention

### Technical Problems to be Solved in the Invention

The present invention is implemented in view of the above-mentioned situations and aims to provide an AIE fluorescent probe composition that can directly use hydrophobic AIE molecules to measure a CMC of a surfactant solution without derivation, and to provide a method and device for measuring a CMC of a surfactant solution using the AIE fluorescent probe composition, and a method and device for CMC determination based on an AIE fluorescent probe.

### Methods for Solving the Problems

The inventors have conducted in-depth studies on the above-mentioned problems, and found that some hydrophobic AIE molecules can be dissolved in organic solvents having specific structures to form stable solutions and significant AIE characteristic can be exhibited within appropriate concentration ranges with no need to wait for the evaporation of the organic solvents. Therefore, fluorescent probe compositions containing such hydrophobic AIE molecules and specific organic solvents can be directly used to measure the CMC of a surfactant solution. The above-mentioned problems are thus well solved.

The present invention provides an AIE fluorescent probe composition, which is a probe solution for measuring a CMC of a surfactant solution, characterized in that it comprises a probe compound and an auxiliary agent, where the probe compound is a hydrophobic AIE molecule, and the auxiliary agent is at least one organic solvent expressed by the following general formula (1):

(R)ₙ-X (1)
where R is a substituted or unsubstituted linear or branched alkyl group having 3-10 carbon atoms; n is an integer of 1 or 2, and when n is 2, two R groups can be the same or different; and
X is any polar group selected from hydroxyl, amino, cyano, halogen, acylamino, carbonyl, aldehyde, ester, and ether groups.

The present invention further provides a method for measuring a CMC of a surfactant solution, including the following sequential steps:
a solution preparation step: preparing a series of surfactant solutions to be measured having increasing concentrations in a plurality of sample pools,
a probe addition step: adding a certain amount of probe solution to each of the plurality of sample pools,
a detection step: detecting a fluorescence intensity of each solution to be measured using a detection means, and
a decision step: deciding the CMC of the surfactant solution according to a changing trend of the detected fluorescence intensities of the solutions to be measured,
characterized in that the probe solution is the AIE fluorescent probe composition of the present invention.

Moreover, the present invention further provides a device for measuring a CMC of a surfactant solution, including:
a plurality of sample pools in which a series of surfactant solutions to be measured having increasing concentrations were prepared,
a probe container in which a probe solution containing a probe compound is held,
a sample adding means configured to take a certain amount of probe solution out of the probe container for adding to the plurality of sample pools,
a detection means configured to detect fluorescence intensities of the solutions to be measured in the plurality of sample pools, and
a decision means configured to decide the CMC of the surfactant solution according to a changing trend of the fluorescence intensities of the solutions to be measured detected by the detection means,
characterized in that the probe solution is the AIE fluorescent probe composition of the present invention. Moreover, the present invention further provides a method for CMC determination based on an AIE fluorescent probe, which is a method for determining whether a surfactant solution reaches a critical
micelle concentration (CMC), characterized in that it includes the following steps:
   a solution preparation step: preparing a solution to be measured by adding an initial amount of surfactant to water and mixing;
   a sampling step: transferring a small amount of the solution to be measured to the sample pool;
   a probe addition step: adding the AIE fluorescent probe to the sample pool, and applying slight vibration to form a mixed solution;
   a detection step: detecting a fluorescence intensity of the mixed solution by means of a fluorescence detector, and outputting a detection signal S; and
   a determination step: determining whether the CMC is reached according to a changing trend of the detection signal S; if the determination result is yes, outputting the concentration of the solution to be measured as the CMC, and finishing all the steps; and if the determination result is no, emptying the sample pool, returning to the solution preparation step, supplementing a specified amount of surfactant to the solution to be measured, and continuously performing the subsequent sampling step, probe addition step, detection step, and determination step;
   where in the determination step, if the determination result is no, but the number of times of supplementing the specified amount of surfactant in the solution preparation step has reached a predetermined threshold, all the steps are finished.

Moreover, the present invention further provides a device for CMC determination based on an AIE fluorescent probe, which is a device for determining whether a surfactant solution reaches a critical micelle concentration (CMC). The device includes a surfactant storage means, an addition means, a sampling means, a sample pool, an AIE fluorescent probe storage means, a sample adding means, a detection means, a CMC determination means, and a decision means, where the following operations are performed in sequence:
the addition means takes a certain amount of surfactant out of the surfactant storage means and mixes the surfactant with water to form a solution to be measured;
the sampling means transfers a small amount of the solution to be measured to the sample pool;
the sample adding means takes a trace amount of probe solution out of the AIE fluorescent probe storage means for adding to the sample pool, and applies slight vibration to form a mixed solution;
the detection means detects a fluorescence intensity of the mixed solution and transmits an obtained detection signal to the CMC determination means;
the CMC determination means determines whether the CMC is reached according to a changing trend of the detection signal;
if the determination result of the CMC determination means is yes, the decision means outputs the concentration of the solution to be measured as the CMC, and all the operations are finished;
if the determination result of the CMC determination means is no and the number of execution times of the addition means is less than a predetermined threshold, the sample pool is emptied, and the addition means supplements a specified amount of surfactant to the solution to be measured, and the subsequent operations are performed continuously; and
if the determination result of the CMC determination means is no and the number of execution times of the addition means has reached the predetermined threshold, all the operations are finished.

### Effects of the Invention

An unsubstituted hydrophobic AIE molecule is used in the AIE fluorescent probe composition of the present invention, and an appropriate organic solvent is introduced into the composition as an auxiliary agent so that the unsubstituted hydrophobic AIE molecule can be well dispersed into a waterborne system stably. Thus, the problem of the hydrophobicity of the unsubstituted AIE probe molecule is solved. After the AIE fluorescent probe composition of the present invention is added to a surfactant solution, the auxiliary agent (i.e., the organic solvent) assists the hydrophobic AIE molecule in forming a stable dispersion structure in an aggregate, such as micelle, of the surfactant solution. The CMC of the surfactant solution can be measured without the evaporation step of the auxiliary agent, and the convenience of use in actual scenarios may be greatly improved. Furthermore, as a probe solution, the AIE fluorescent probe composition of the present invention can accurately detect a fluorescence intensity change corresponding to the CMC within an appropriate concentration range by using a conventional fluorescence detector and the like. Thus, new solution idea and research direction are opened up for the use of AIE fluorescent molecules in more extensive fields.

### Brief Description of the Drawings

FIG. 1 is a schematic diagram illustrating molecular simulation results of the solubilization effect of auxiliary agents on a hydrophobic AIE molecule in the mixed micelle of surfactant, where (A) the auxiliary agent is butylamine, and (B) the auxiliary agent is butanol.
FIG. 2 is a diagram representing curves of fluorescence intensities (voltage) changing with concentration when an AIE fluorescent probe composition of the present invention is added to a directly prepared aqueous solution of a super cleaning detergent (Example 1) and when no AIE fluorescent probe composition of the present invention is added (Reference Example 1).
FIG. 3 is a diagram representing a curve of surface tension of the directly prepared aqueous solution of the super cleaning detergent used in Example 1 changing with concentration.
FIG. 4 is a diagram representing a curve of fluorescence intensity (voltage) changing with concentration when the AIE fluorescent probe composition of the present invention is added to an aqueous solution of a super cleaning detergent for actual machine washing in Example 7.
FIG. 5 is a diagram representing a curve of interfacial tension of the aqueous solution of the super cleaning detergent for actual machine washing used in Example 7 changing with concentration.

### Detailed Description of the Invention

The specific embodiments of the present invention will be illustrated below. However, the present invention is not limited to the following embodiments in any way, and appropriate alterations may be made to the embodiments within the scope of the objectives of the present invention.

In the description, a numerical range expressed with "-" refers to a range including numerical values recited before and after "-" as a minimum and a maximum, respectively.

In the description, in the case of a plurality of surfactant components present in a surfactant solution (sometimes referred to as a detergent solution), the concentration of a surfactant (sometimes referred to as a detergent) refers to the total concentration of the plurality of surfactant components present in the surfactant solution, unless otherwise specifically stated.

### (AIE Fluorescent Probe Composition)

The AIE fluorescent probe composition of the present invention is a probe solution for measuring a CMC of a surfactant solution, characterized in that it comprises a probe compound and an auxiliary agent, where the probe compound is a hydrophobic AIE molecule, and the auxiliary agent is at least one organic solvent expressed by the following general formula (1):

(R)ₙ-X (1)

where R is a substituted or unsubstituted linear or branched alkyl group having 3-10 carbon atoms; n is an integer of 1 or 2, and when n is 2, two R groups can be the same or different; and
X is any polar group selected from hydroxyl, amino, cyano, halogen, acylamino, carbonyl, aldehyde, ester, and ether groups.

Each component in the AIE fluorescent probe composition of the present invention is described in detail below.

### [Probe Compound]

The probe compound of the present invention is a hydrophobic AIE molecule having the AIE property. Aggregation-induced emission (AIE) is a phenomenon accidentally discovered by the team of Academician Tang Benzhong in 2001: some silole molecules (HPS, e.g., 1,1,2,3,4,5-hexaphenylsilole) do not emit light in a solution, but may have greatly enhanced light emission in an aggregation state or as a solid thin film. Because the enhanced light emission is caused by aggregation, this phenomenon is defined as "aggregation-induced emission".

Structurally, common AIE molecules having the AIE property are roughly classified into a pure hydrocarbon system, a heteroatom containing system, a macromolecular system, and a metal containing system. With a conjugate planar skeleton of aromatic system, most of these molecules can form a helical structure in space, and may change their conjugation property under the influence of different aggregation states so as to exhibit the AIE characteristic in fluorescence spectra. Due to the presence of the skeleton of the aromatic system, most of these molecules exhibit the hydrophobic property of being insoluble in water in their unsubstituted original states.

The probe compound of the present invention preferably includes a hydrophobic AIE molecule having a compound expressed by any of the following chemical formulas 1-12 as a basic skeleton:

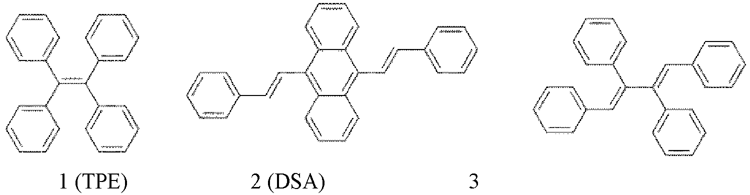

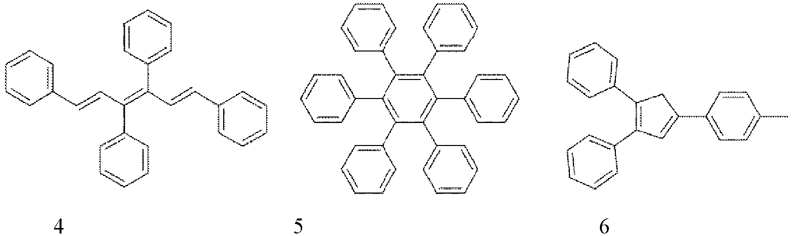

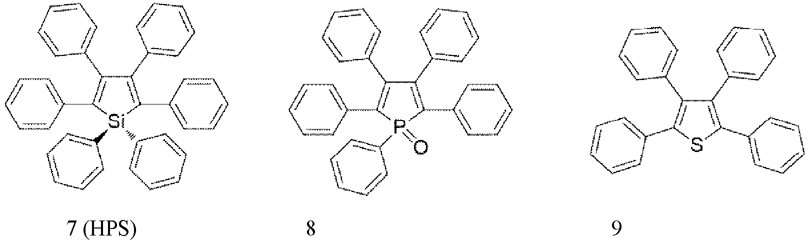

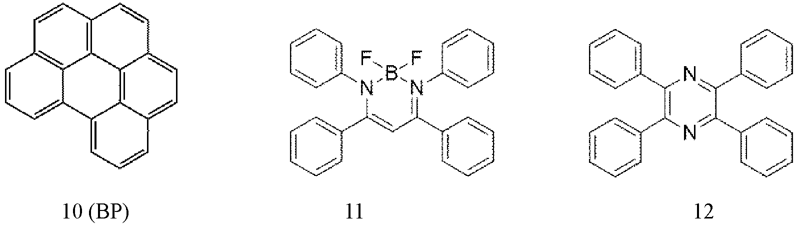

The hydrophobic AIE molecule used in the present invention preferably includes unsubstituted AIE molecules such as tetraphenylethylene (TPE) expressed by chemical formula 1, hexaphenylsilole (HPS) expressed by chemical formula 7, distyrenylanthracene (DSA) expressed by chemical formula 2, and 1,12-benzoperylene (BP) expressed by chemical formula 10, or may also be derivatives, polymers, metal complexes or the like including the basic skeleton structures of such AIE molecules, which exhibit hydrophobicity against aqueous solutions. In the present invention, "hydrophobicity" means exhibiting a property of being insoluble or difficultly soluble in water.

The above-mentioned AIE molecules exhibit completely different fluorescence properties in different aggregation states and dispersion states. Moreover, different types of AIE molecules may have different luminescence mechanisms in different solution systems. For example, tetraphenylethylene (TPE) will not emit fluorescence when being dissolved in a good solvent and will emit high fluorescence when being in a poor solvent. In the prior art, the principle of detecting various surfactant solutions by using the TPE molecules is as follows: when a surfactant is at a low concentration, most TPE molecules may be aggregated in the water phase, and since water is a poor solvent to the TPE molecules, the TPE molecules may be aggregated to generate strong fluorescence. When the surfactant is at a high concentration, the TPE molecule may be encapsulated into the hydrophobic core of a micelle molecule. In this case, the TPE molecules may be dispersed by different micelle molecules and dispersed in the micelle cores. The internal rotation of the TPE molecules may not be limited, and therefore, the fluorescence of the TPE molecules may be reduced greatly. In consideration of completely different fluorescence properties of the TPE in the aggregation state and the dispersion state, the TPE can be used to detect the CMC of a surfactant solution and to track the assembly and disassembly of an amphipathic molecule.

Moreover, non-patent document 1 reported that hydrophobic hexaphenylsilole (HPS) molecules were used as probes to measure the CMC of a surfactant solution. The method was as follows: the HPS was firstly dissolved into a volatile organic solvent (e.g., n-hexane), and then added to an aqueous surfactant solution. It was difficult for the HPS to be dispersed into water for its hydrophobicity, and therefore to form a covering layer, and ultrasonic wave must be used to realize uniform mixing. Subsequently, after cyclohexane was evaporated completely, the HPS entered the micelles formed by the surfactant molecules to emit strong fluorescence. In other words, when the n-hexane is used as a good solvent to dissolve the HPS probe molecules, whether the solvent is evaporated has a decisive influence on the fluorescence result: when the solvent is not evaporated, the HPS probe molecules may be preferentially dissolved in the solvent, and the HPS does not emit fluorescence while the surfactant solution does not emit light. The AIE characteristic can be exhibited only after the solvent is evaporated and part of the HPS precipitated to different extents enters and is aggregated into the hydrophobic cores of the surfactant micelles.

However, the n-hexane itself is a highly volatile colorless liquid having a low boiling point and a low flashing point. The probe solution is hard to store after being prepared, and the step of solvent evaporation must be included in the process of measuring the CMC. If the AIE molecules are added directly without being dissolved into an organic solvent, it may result in an inaccurate addition amount and inhomogeneous mixing of the AIE molecules, thus affecting the accuracy of the test result.

### [Auxiliary Agent]

The inventors have found some organic solvents having specific structures as auxiliary agents to the hydrophobic AIE molecules through in-depth studies and screening. These organic solvents are not prone to evaporation and can cause the AIE probe molecules to exhibit significant AIE characteristic within an appropriate concentration range.

As a typical hydrophobic AIE molecule, the hexaphenylsilole (HPS) is highly soluble in good solvents such as acetonitrile, tetrahydrofuran and chloroform, slightly soluble in alcohols such as methanol, and completely insoluble in water. It is generally believed that the type or polarity of a solvent almost has no influence on the fluorescence absorption or emission spectrum of the HPS.

The inventors have studied the solubility of the HPS in a series of organic solvents and the AIE performance thereof in a surfactant solution (e.g., the aqueous solution of Bluemoon super detergent), with results being shown in Table 1. Table 1 Properties of Solvents, and Test and Comparison of AIE performance of HPS in Different Solvents

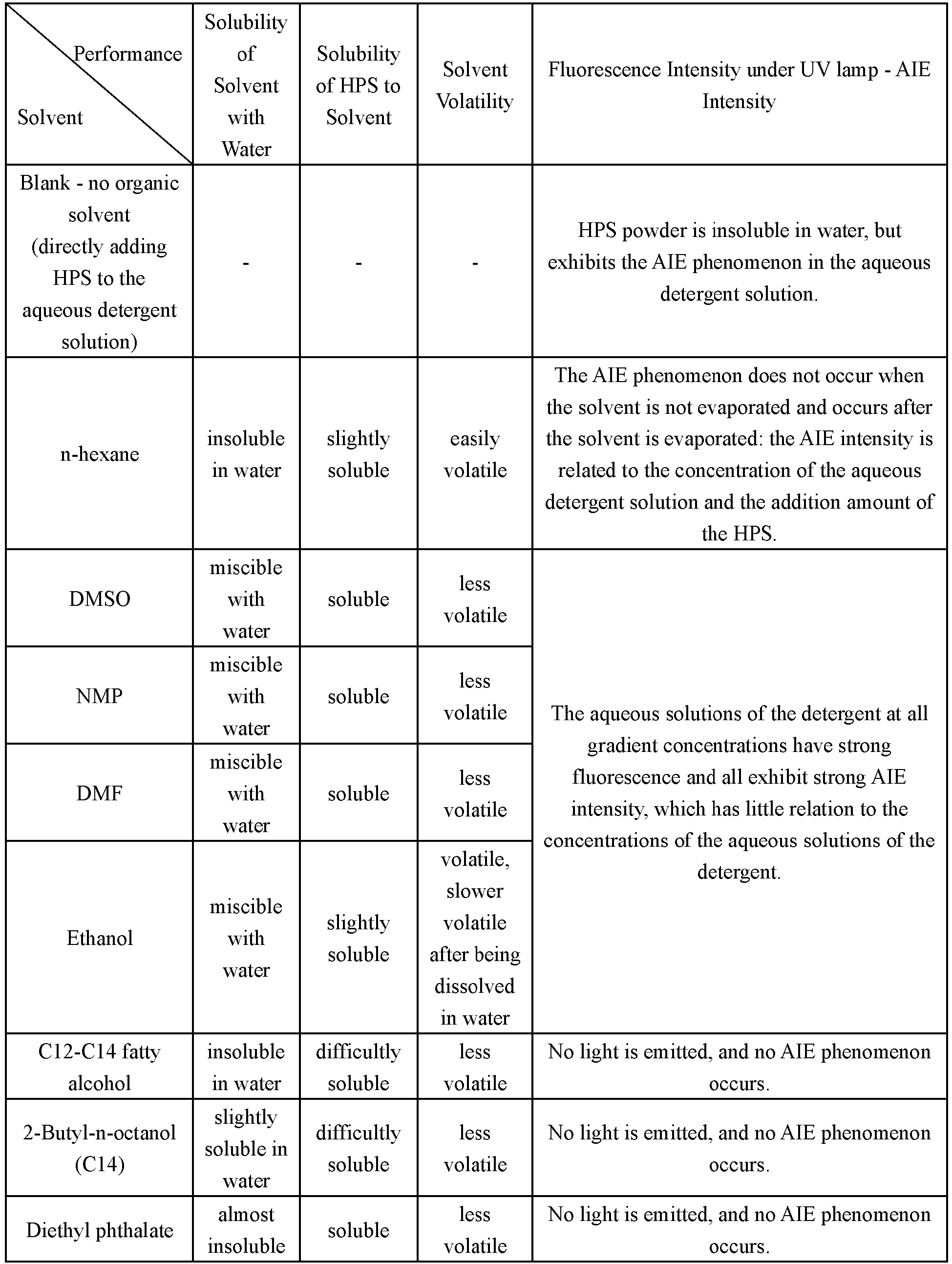

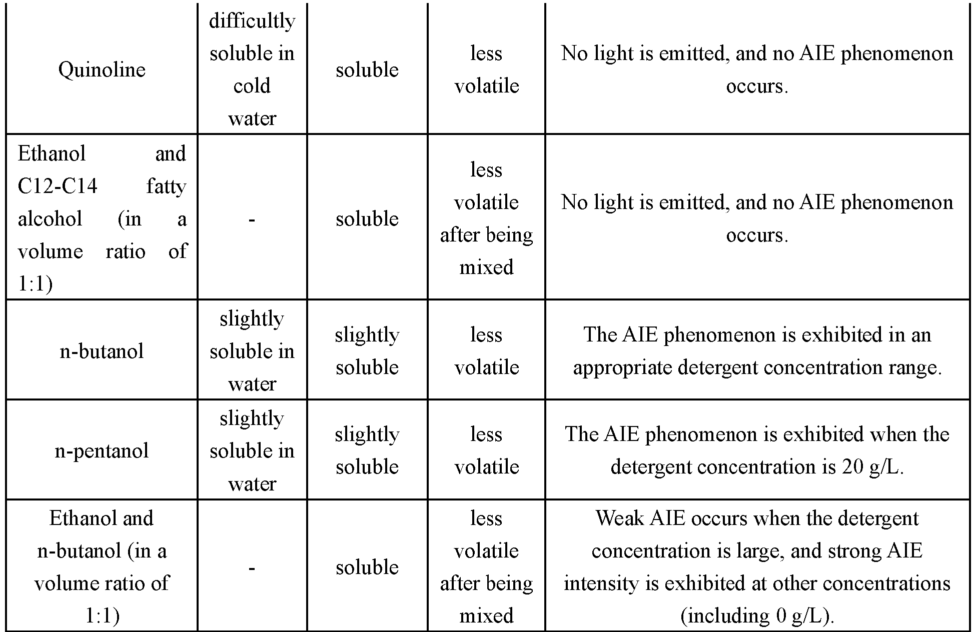

From the results of Table 1, among the various organic solvents, the HPS exhibits significant AIE phenomenon in the solvents such as n-butanol and n-pentanol within a certain detergent concentration range. Such organic solvents have the properties of being slightly soluble in water, slightly soluble to HPS and not prone to evaporation, and are suitable for use as the auxiliary agent included in the probe composition of the present invention. Especially, the n-butanol may exhibit significant AIE phenomenon within an appropriate detergent concentration range (e.g., 0.1 g/L-0.2 g/L), and is more preferably used as the auxiliary agent in the present invention.

Further research results show that in addition to the organic alcohols, all organic solvents having a specific amphiphilic structure can be used as the auxiliary agent in the present invention. These organic solvents are characterized by having an alkyl chain of a certain length in each molecule and having a polar group (a functional group) at an end or in the middle of the alkyl chain, thus forming an amphiphilic structure having both of a hydrophilic region formed by the polar group and a hydrophobic region formed by the alkyl group in the molecule.

In other words, the auxiliary agent included in the AIE fluorescent probe composition of the present invention is at least one organic solvent expressed by the following general formula (1):

(R)ₙ-X (1)

where R is a substituted or unsubstituted linear or branched alkyl group having 3-10 carbon atoms; n is an integer of 1 or 2, and when n is 2, two R groups can be the same or different; and
X is any polar group selected from hydroxyl, amino, cyano, halogen, acylamino, carbonyl, aldehyde, ester, and ether groups.

The hydrophobic AIE molecules in the present invention are soluble or slightly soluble in the auxiliary agent, and have higher solubility in the auxiliary agent than in water. In this way, when the probe composition is added to a waterborne system such as a surfactant solution at a low concentration, the probe compound tends to be preferably dissolved in the auxiliary agent and is stably dispersed in the waterborne system with the aid of the auxiliary agent. Therefore, the hydrophobic AIE molecules in the present invention are dissolved in the auxiliary agent to form a stable probe solution.

From the perspective of long-term storage stability, these auxiliary agent molecules are preferably less volatile organic solvents. Generally, a highly volatile organic solvent may have a low boiling point, and an organic solvent having a high boiling point may not be prone to evaporation. Therefore, in the present invention, the auxiliary agent has a boiling point of preferably above 70°C, more preferably 70°C-155°C, and further preferably 75°C-150°C.

From the perspective of dispersing the probe compound more stably, n in the general formula (1) is preferably 1. That is, the hydrophilic region formed by the polar group X is preferably located at an end of the alkyl molecular chain.

R in the general formula (1) is a substituted or unsubstituted linear or branched alkyl group having 3-10 carbon atoms, where the number of the carbon atoms of R reflects the length of the alkyl chain in the auxiliary agent molecule. If the alkyl chain is too short, the formed hydrophobic region may be insufficient to stabilize the AIE molecules and have insufficient solubilization effect on the AIE molecules entering the surfactant micelles. Moreover, if the number of the carbon atoms is too small, the volatility of the auxiliary agent molecules may be excessively high, which is adverse to the storage stability of the probe solution. On the other hand, if the alkyl chain is too long, the water solubility of the auxiliary agent itself is reduced, which is also adverse to the stability of the probe solution, and the solubilization effect on the AIE molecules entering the surfactant micelles may not be produced. From the perspectives of further improving the solubilization effect on the micelles and maintaining the stability of the probe solution, R in the general formula (1) is preferably an unsubstituted linear or branched alkyl group having 3-6 carbon atoms, more preferably 4-5 carbon atoms.

Furthermore, from the perspectives of the safety, availability and water solubility of the auxiliary agent molecules, the polar group X in the general formula (1) is preferably selected from hydroxyl or amino group.

More preferably, the auxiliary agent is one or more selected from n-propanol, isopropanol, tert-butanol, n-butanol, n-butylamine, and pentylamine. The auxiliary agent may be a single auxiliary agent or may be a mixture of more than two auxiliary agents.

For different AIE molecules, different auxiliary agent types may be selected, which will not be particularly limited. In the AIE fluorescent probe composition of the present invention, as a preferred combination of the hydrophobic AIE molecule and the auxiliary agent, a combination of the hydrophobic AIE molecule being unsubstituted HPS, TPE, DSA or 1,12-benzoperylene, and the auxiliary agent being an organic alcohol or organic amine having 3-5 carbon atoms may be enumerated.

Furthermore, the inventors have found that the preparation method of the probe solution would have a certain influence on the fluorescence property of the AIE fluorescent probe composition. For example, when the auxiliary agent is a mixed solvent of an organic alcohol having 3-5 carbon atoms and acetone, sometimes no stable and significant AIE phenomenon may occur due to the influence of the volatility of the acetone on the aggregation state of the AIE molecules. However, when the solution of the AIE fluorescent probe composition is obtained by pre-dissolving the AIE probe molecules in the acetone, then evaporating the acetone completely, and finally adding the organic alcohol thereto, stable and significant AIE phenomenon may occur within an appropriate concentration range. It is speculated that this may be because the micro-condensed state of the molecules changes after the AIE probe molecules are firstly dissolved into the acetone and then the acetone is evaporated completely.

The speculations of the inventors on the mechanism of the AIE phenomenon of the AIE fluorescent probe composition in a surfactant solution are as follows.

Firstly, the hydrophobic AIE molecules are dissolved into an organic solvent as the auxiliary agent to form the probe solution. In the case of adding the probe solution including the probe compound and the auxiliary agent to the surfactant solution, when the concentration of the surfactant is low and does not reach the CMC, due to having the specific amphiphilic structure, the auxiliary agent may adsorb or cover the hydrophobic AIE molecules so as to let them stably dispersed into the aqueous surfactant solution. When the concentration of the surfactant is increased to the CMC, a large quantity of surfactant molecules start being self-assembled to form micelles, and at this time, the auxiliary agent molecules, without extra evaporation, enter into the inner cavities of the micelles formed by the surfactant molecules together with the hydrophobic AIE molecules and are arranged alternately with the surfactant molecules forming the micelles to form a "palisade" structure. The AIE molecules are aggregated in the vicinity of the palisade layer of the micelle, and the aggregation state induces strong AIE.

In other words, in the AIE fluorescent probe composition of the present invention, the auxiliary agent not only serves as a solvent to the hydrophobic AIE molecules, but also can assist the hydrophobic AIE molecules in entering the palisade layer of the micelle of the surfactant because of its amphiphilic structure feature having the hydrophilic region and the hydrophobic region. So the solubilization effect in the micelles can be produced, and significant AIE characteristic may be exhibited within an appropriate concentration range.

To verify the above speculated mechanism, the inventors conducted the following molecular simulation experiments.

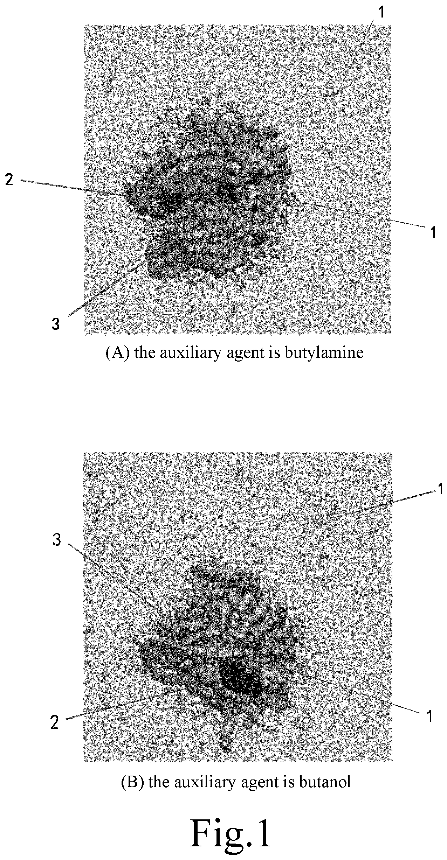

FIG. 1 is a schematic diagram illustrating the molecular simulation results of the solubilization effect of auxiliary agents on a hydrophobic AIE molecule in the mixed micelle of surfactant, where (A) the auxiliary agent is butylamine, and (B) the auxiliary agent is butanol.

Regarding the auxiliary agent molecules, a plurality of polar organic solvents such as butylamine, pentylamine, pentanol, propylamine, butanol, butyl aldehyde, butyric acid, isopropanol, n-propanol, and tert-butanol were selected and used in the molecular simulation experiments. Regarding the AIE fluorescent probe molecule, 1,12-benzoperylene was selected and used. The molecular simulation experiments of solubilization were conducted in the mixed micelles (1:1) of sodium alcohol ether sulphate (AES) and fatty alcohol polyoxyethylene ether (AEO).

A 21 nm × 21 nm × 21 nm cubic water box of spherical micelle was set up firstly, with United-atom force field being used for each molecule, and 50 ns NPT controlled pressure simulation was carried out using gromacs software. Results showed that stable micelles were formed in each system. However, since the auxiliary agent molecules were different in solubility in water, the formed micelles were slightly different in size and shape, and the number of the auxiliary agent molecules solubilized in the micelles and the number of the auxiliary agent molecules dispersed in water were different.

From FIG. 1, stable spherical micelle models were obtained when the auxiliary agent 1 was (A) butylamine and when the auxiliary agent 1 was (B) butanol, and benzopyrene 2 serving as the fluorescent probe molecule (the dark big spot in FIG. 1) was solubilized within the micelle. The surfactant molecule 3 was formed as the micelle skeleton and coated with the fluorescent probe molecules. It could be seen that the micelle formed with the butylamine as the auxiliary agent was more regular than that formed with the butanol as the auxiliary agent.

Furthermore, the inventors further calculated the distance between each fluorescent probe molecule and the water molecule layer, and the result was greater than 0.2 nm. This further indicated that the fluorescent probe molecule was isolated from the water molecule and solubilized in the micelle core. In addition, by comparing the number of hydrogen bonds, it could be known that the butylamine having low solubility in water, thus was more prone to forming the micelle with the surfactant and could play a role in stabilizing the micelle.

As can be seen from the results of the above-mentioned molecular simulation, each system of the AIE fluorescent probe composition of the present invention can form the stable micelle, and it can be seen that the auxiliary agent molecules are involved in the formation of the micelle and located on a side, close to the polar group, of the palisade layer of the surfactant micelle, which positively contributes to the formulation of the mixed surfactant micelle and the coating of the AIE fluorescent probe molecules.

From the current results, the constructed molecular model is reasonable; the method is feasible; and the results are reasonable.

### [Other Components]

In addition to the hydrophobic AIE molecule as the probe compound and the specific organic solvent as the auxiliary agent, other components, e.g., additives such as a stabilizing agent and a preservative, may also be included in the AIE fluorescent probe composition of the present invention without affecting the AIE effect thereof.

In the case of including other components, the total content of the other components is preferably lower than 5 mass %, more preferably lower than 1 mass %, relative to the total content of the AIE fluorescent probe composition.

In the present invention, there is no particular limitation on the proportion of the content of the auxiliary agent and the probe compound in the AIE fluorescent probe composition as long as appropriate AIE intensity can be reached. Preferably, a proportion of the auxiliary agent in the whole AIE fluorescent probe composition is 40 mass % to 90 mass %, more preferably 50 mass % to 80 mass %. Preferably, a proportion of the probe compound in the whole AIE fluorescent probe composition is 10 mass % to 60 mass %, more preferably 20 mass % to 50 mass %. Furthermore, the AIE fluorescent probe composition may include only the auxiliary agent and the probe compound.

From the perspectives of the solubility, the storage stability and the AIE intensity of the probe solution, in the AIE fluorescent probe composition of the present invention, the concentration of the hydrophobic AIE molecule as the probe compound is preferably 500-2000 µmol/L, more preferably 600-1500 µmol/L. After the AIE fluorescent probe composition is added to the surfactant solution to be measured, the concentration of the probe compound in the surfactant solution is preferably 1-1000 µmol/L, preferably 10-500µmol/L. The probe composition of the present invention includes the hydrophobic AIE molecule as the probe compound and the organic solvent having the specific amphiphilic structure as the auxiliary agent so that a stable probe solution can be formed. Moreover, the auxiliary agent achieves the solubilization effect on the hydrophobic AIE molecules in the mixed micelles of the surfactant, and significant AIE characteristic is exhibited within an appropriate concentration range. Thus, after the probe solution of the present invention is added to a test sample, the CMC can be measured accurately without evaporating the solvent. The convenience of use in actual scenarios is greatly improved, and the practical use requirements of the AIE fluorescent probe in measuring the CMC of a surfactant solution can be met.

### (Method for Measuring CMC of Surfactant Solution)

Such an AIE fluorescent probe composition of the present invention that includes a hydrophobic AIE molecule as the probe molecule and a specific organic solvent as the auxiliary agent can be directly used, in the form of a stable probe solution, to measure the CMC of a surfactant solution (a detergent solution). Since the AIE fluorescent probe composition of the invention includes a neutrally charged hydrophobic AIE molecule, compared with a derived hydrophilic AIE molecule, such an AIE fluorescent probe composition is not prone to being interfered by the interaction between charges, and thus may be applicable to various types of surfactants.

The surfactant in the present invention may include at least one of an anionic surfactant, a nonionic surfactant, a cationic surfactant, and an amphiphilic surfactant. More preferably, the surfactant in the present invention includes at least the anionic surfactant and/or the nonionic surfactant.

As examples of the anionic surfactant, alkyl sulfate, alkyl alcohol polyether sulphate, alkyl carboxylate, alkyl sulfonate, phosphate surfactants and the like may be enumerated.

As examples of the nonionic surfactant, alkyl polyglucoside, alkyl alcohol ether polyglucoside, polyoxyethylene alkyl ether, polyoxyethylene polyoxypropylene alkyl ether, polyoxyethylene fatty acid ester, fatty acid alkanolamide and the like may be enumerated.

In the surfactant solution as the solution to be measured, the above-mentioned surfactant component may be used alone, or more than two surfactant components may be used in combination.

Furthermore, the surfactant solution may include a fluorescent whitening agent and the like.

The method for measuring a CMC of a surfactant solution in the present invention includes the following steps:
a solution preparation step: preparing a series of surfactant solutions to be measured having increasing concentrations in a plurality of sample pools,
a probe addition step: adding a certain amount of probe solution to each of the plurality of sample pools,
a detection step: detecting a fluorescence intensity of each solution to be measured using a detection means, and
a decision step: deciding the CMC of the surfactant solution according to a changing trend of the detected fluorescence intensities of the solutions to be measured,
characterized in that the probe solution is the AIE fluorescent probe composition of the present invention.

When the hexaphenylsilole (HPS) is used as the probe compound, it is found in the detection step that the fluorescence intensities of the solutions to be measured in the plurality of sample pools have an abrupt change from low to high, and gradually decrease after reaching a maximum fluorescence intensity. Therefore, in the decision step, the concentration of the solution to be measured in the sample pool corresponding to the detected maximum fluorescence intensity is taken as the CMC of the surfactant solution.

Preferably, the concentration of the probe compound in the AIE fluorescent probe composition is 500-2000 µmol/L. Furthermore, the concentration of the probe compound in the surfactant solution is 1-1000 µmol/L. Preferably, the series of increasing concentrations of the surfactant described above ranges from 0 to 20 g/L, and the probe solution is added in a volume ratio of 1: 1000-100: 1000 to the surfactant solution.

By the method described above, with a plurality of sample pools to which the surfactant solutions at a series of increasing concentrations are added, the fluorescence intensity in each sample pool can be determined visually. Even without fluorescence detection equipment, the sample pool with the maximum fluorescence intensity may also be determined by naked eyes. Thus, the CMC of the surfactant solution can be measured easily.

Furthermore, instead of a plurality of sample pools, only one sample pool may be used. In this case, a surfactant solution of an initial concentration is prepared in this sample pool, and a certain amount of fluorescent probe was added thereto to form a mixed solution. The fluorescence intensity of the mixed solution is detected. A certain amount of surfactant may be then supplemented to the sample pool for specified times, and the fluorescence intensity of the mixed solution is measured after each supplementation. The CMC of the surfactant solution is decided according to the changing trend of the detected fluorescence intensities. Since the probe only needs to be added once and the surfactant needs to be supplemented for specified times in the measuring method, the method has the advantages of reduced usage of the reagent, and cost saving.

### (Device for Measuring CMC of Surfactant Solution)

The present invention further provides a device for measuring a critical micelle concentration (CMC) of a surfactant solution, including:
a plurality of sample pools in which a series of surfactant solutions to be measured having increasing concentrations were prepared,
a probe container in which a probe solution containing a probe compound is held,
a sample adding means configured to take a certain amount of probe solution out of the probe container for adding to the plurality of sample pools,
a detection means configured to detect fluorescence intensities of the solutions to be measured in the plurality of sample pools, and
a decision means configured to decide the CMC of the surfactant solution according to a changing trend of the fluorescence intensities of the solutions to be measured detected by the detection means,
characterized in that the probe solution is the AIE fluorescent probe composition of the present invention described above.

Preferably, the probe compound is the HPS molecule, when the HPS molecule is used as the fluorescent probe, the detected fluorescence intensity changes from low to high, and the strongest fluorescence intensity is generated in the sample pool corresponding to the CMC.

The detection means is preferably a fluorescence sensor with an excitation wavelength range of 275-375 nm and a receivable wavelength range including at least 350-370 nm or 720-740 nm, which outputs a detection signal of the fluorescence intensity by detecting a change in fluorescence emission peak intensity of the surfactant solution within the wavelength range of 350-370 m or 720-740 nm.

### (Method for CMC Determination Based on AIE Fluorescent Probe)

One use of the AIE fluorescent probe composition of the present invention is as a smart marker for online determination of a smart detergent feeding system in washing equipment.

Existing washing equipment (e.g., an automatic feeding washing machine), which may add a detergent mainly depending on the weight of a fabric load, is not smart, and poor in universality for different detergents and flexibility for various washing scenarios, and there is much room for improvement. Regarding the problem of a marker needing to be solved by the smart determination of the automatic feeding system of a washing machine, the objective is to indicate a point of optimal cleaning efficiency or a point of highest cost performance rather than a point of complete cleaning or basic cleaning.

The inventors have found through research that when the concentration of a detergent including a surfactant component reached the CMC, the washing effect reached the balance point of the optimal cost performance. Therefore, whether the aqueous detergent solution reaches the CMC may be used as a determination criterion for smart detergent feeding.

Therefore, the present invention further provides a method for CMC determination based on an AIE fluorescent probe, which is a method for determining whether a surfactant solution reaches a critical micelle concentration (CMC), characterized in that the method includes the following sequential steps:
a solution preparation step: preparing a solution to be measured by adding an initial amount of surfactant to water and mixing;
a sampling step: transferring a small amount of the solution to be measured to the sample pool;
a probe addition step: adding the AIE fluorescent probe to the sample pool, and applying slight vibration to form a mixed solution;
a detection step: detecting a fluorescence intensity of the mixed solution by means of a fluorescence detector, and outputting a detection signal S; and
a determination step: determining whether the CMC is reached according to a changing trend of the detection signal S; if the determination result is yes, outputting the concentration of the solution to be measured as the CMC, and finishing all the steps; and if the determination result is no, emptying the sample pool, returning to the solution preparation step, supplementing a specified amount of surfactant to the solution to be measured, and continuously performing the subsequent sampling step, probe addition step, detection step, and determination step;
where in the determination step, if the determination result is no, but the number of times of supplementing the specified amount of surfactant in the solution preparation step has reached a predetermined threshold, all the steps are finished.

The surfactant solution used in the method for CMC determination in the present invention may be a directly prepared aqueous detergent solution, and may also be an aqueous detergent solution used in washing equipment for actual machine washing. The above-mentioned aqueous detergent solution is an aqueous detergent solution containing one or more surfactant components, including at least an anionic surfactant and/or a nonionic surfactant.

Since the AIE fluorescent probe having the AIE characteristic is used as a marker in the present invention, a conventional fluorescence detector with low sensitivity may be used to accurately measure the fluorescence intensity of the aqueous detergent solution, and online CMC determination and smart control of a detergent addition amount fluorescence intensity can be realized by converting the fluorescence intensity into the detection signal.

The AIE fluorescent probe used in the method for CMC determination in the present invention may be an aqueous solution of the fluorescent probe containing a water-soluble AIE molecule, and may also be the AIE fluorescent probe composition including a hydrophobic AIE molecule and an auxiliary agent in the present invention. In consideration of the cost, the applicability and the convenience, the AIE fluorescent probe composition of the present invention is preferred.

The aqueous detergent solution added with the HPS molecule as the AIE fluorescent probe has yellow-green fluorescence observed by naked eyes within a certain range, and the fluorescence intensity increases firstly and then decreases significantly. In the case of the directly prepared aqueous detergent solution, the concentration range corresponding to the strongest fluorescence intensity roughly observed by naked eyes is about 0.1 g/L-0.2 g/L. When the detergent concentration is >2 g/L, the fluorescence intensity decreases obviously.

To realize automatic control of washing equipment, the fluorescence intensity of the mixed solution detected by the fluorescence detector needs to be output as the detection signal S. The detection signal S is a voltage signal corresponding to the fluorescence intensity F at a specific wavelength, and is output to a determination means or a decision means described below.

Regarding the threshold S₀, by using the method for measuring the CMC of a surfactant solution described above, a series of surfactant solutions having increasing concentrations may be prepared in a plurality of sample pools or a single sample pool in advance, and the detection signal S corresponding to the detected maximum fluorescence intensity is set as the threshold S₀.

Then, in the determination step, if the detection signal S is equal to or higher than the preset threshold S₀, the determination result is yes (the aqueous detergent solution has reached the CMC); and if the detection signal S is lower than the threshold S₀, the determination result is no (the aqueous detergent solution has not reached the CMC).

However, since the CMC of the aqueous detergent solution in the washing equipment for actual machine washing is affected by multiple factors (e.g., water temperature, fabric weight), sometimes the preset threshold S₀ does not correspond to the actual CMC. Usually, the apparent CMC of the aqueous detergent solution for actual machine washing is far greater than the CMC corresponding to the above-mentioned threshold S₀. In this case, it is preferred to add the detergent in a small amount in batches during actual washing, then online determination of the apparent CMC of the aqueous detergent solution is performed by the method for CMC determination of the present invention, thereby realizing the smart addition of the detergent.

Preferably, when the determination steps are carried out for more than two times, whether the concentration of the surfactant reaches the CMC is determined by observing a change in difference between two adjacent detection signals S_{X}, S_{Y}.

More specifically, if the difference S_{Y}-S_{X} between the latter SY and the former S_{X} of the two adjacent detection signals is 0 or becomes a negative value, the determination result is yes (the aqueous detergent solution has reached the CMC); and if the difference S_{Y}-S_{X} is greater than 0, the determination result is no (the aqueous detergent solution has not reached the CMC).

When the method for CMC determination described above is applied to the actual washing process of the washing equipment, the determination step is mainly used to decide whether the detergent needs to be supplemented. After the detergent is added for the first time, the washing equipment may start washing. Sampling and determination may be performed for a plurality of times in the washing process. Washing may also be started after all the steps are finished.

In the method for CMC determination based on an AIE fluorescent probe in the present invention, since the AIE fluorescent probe having the AIE characteristic is used, a change in AIE fluorescence intensity may be identified using a common low-sensitivity fluorescence detector and even sometimes only by naked eyes without the aid of a precise instrument. Therefore, the CMC of the aqueous detergent solution may be determined simply, rapidly and efficiently. This method can be effectively applied to the washing industries to monitor a detergent content in a washing aqueous solution, which is of practical guiding significance in smart detergent feeding.

### (Device for CMC Determination Based on AIE Fluorescent Probe)

Thus, the present invention further provides a device for CMC determination based on an AIE fluorescent probe, which is a device for determining whether a surfactant solution reaches a critical micelle concentration (CMC). The device includes a surfactant storage means, an addition means, a sampling means, a sample pool, an AIE fluorescent probe storage means, a sample adding means, a detection means, a CMC determination means, and a decision means, where the following operations are performed in sequence:
the addition means takes a certain amount of surfactant out of the surfactant storage means and mixes the surfactant with water to form a solution to be measured;
the sampling means transfers a small amount of the solution to be measured to the sample pool;
the sample adding means takes a trace amount of probe solution out of the AIE fluorescent probe storage means for adding to the sample pool, and applies slight vibration to form a mixed solution;
the detection means detects a fluorescence intensity of the mixed solution and transmits an obtained detection signal to the CMC determination means;
the CMC determination means determines whether the CMC is reached according to a changing trend of the detection signal;
if the determination result of the CMC determination means is yes, the decision means outputs the concentration of the solution to be measured as the CMC, and all the operations are finished;
if the determination result of the CMC determination means is no and the number of execution times of the addition means is less than a predetermined threshold, the sample pool is emptied, and the addition means supplements a specified amount of surfactant to the solution to be measured, and the subsequent operations are performed continuously; and
if the determination result of the CMC determination means is no and the number of execution times of the addition means has reached the predetermined threshold, all the operations are finished.

The AIE fluorescent probe used in the device is preferably the AIE fluorescent probe composition of the present invention described above.

When the device described above is applied to actual washing equipment, the CMC may also not be output, and may only decide whether the surfactant (detergent) will be supplemented according to the determination result of the CMC determination means. The decision means may control the washing equipment to start washing after the completion of the initial detection operation or the completion of all the operations.

The detection means may be a fluorescence sensor with an excitation wavelength range of 275-375 nm and a receivable emission wavelength range of 350-750 nm, preferably a fluorescence sensor with the excitation wavelength range of 275-375 nm and the receivable wavelength range including at least 350-370 nm or 720-740 nm.

Excited by 365 nm ultraviolet light, the HPS molecule as the AIE fluorescent probe mainly have two fluorescence intensity emission peaks: a sharp fluorescence peak with high intensity within the range of 350-370 nm, and a wide and short fluorescence peak with relatively low intensity within the range of 720-740 nm, and the emission peaks do not overlap with the emission peaks of a fluorescent whitening agent (e.g., CBS) included in the aqueous solution of an actual detergent (e.g., the super cleaning detergent and the super whitening detergent produced by the Bluemoon company). That is, the wavelength range of 400-550 nm within which the emission peaks of the fluorescent whitening agent CBS occur is avoided. In this way, the interference of the fluorescent whitening agent with the CMC determination result may be avoided.

The method and device for CMC determination based on an AIE fluorescent probe in the present invention may be practically applied to washing equipment for online detection and online determination of a CMC and automatic addition of a detergent, and thus can be applied to the smart detergent feeding system of the washing equipment.

### Examples

The present invention is described more specifically below by examples. However, the present invention is not limited to the following examples as long as it does not depart from the spirit thereof.

### (Example 1)

### <Preparation of AIE Fluorescent Probe Composition>

HPS (98% purity, and molecular weight M=938) as a probe compound was dissolved into n-butanol as an auxiliary agent at a concentration of 0.001 mol/L to form a probe solution.

### <Preparation of Solutions to be Measured Containing Surfactant>

For the solutions to be measured containing a surfactant, a series of aqueous detergent solutions at concentrations of 0.02 g/L, 0.05 g/L, 0.1 g/L, 0.2 g/L, 0.5 g/L, 1 g/L, 2 g/L, 5 g/L, 10 g/L and 20 g/L were directly prepared from super cleaning detergent B1-B10 (trade name, produced by the Bluemoon company), and 150 µL of the above-mentioned probe solution was added to 5 mL of each aqueous detergent solution to form the solutions to be measured. The concentration of the HPS probe in the solutions to be measured was 30 µmol/L.

### (Reference Example 1)

Except that the probe solution was not added, solutions to be measured containing a surfactant of Reference Example 1 were prepared as the same with Example 1 for control.

### <Measurement of Fluorescence Intensity>

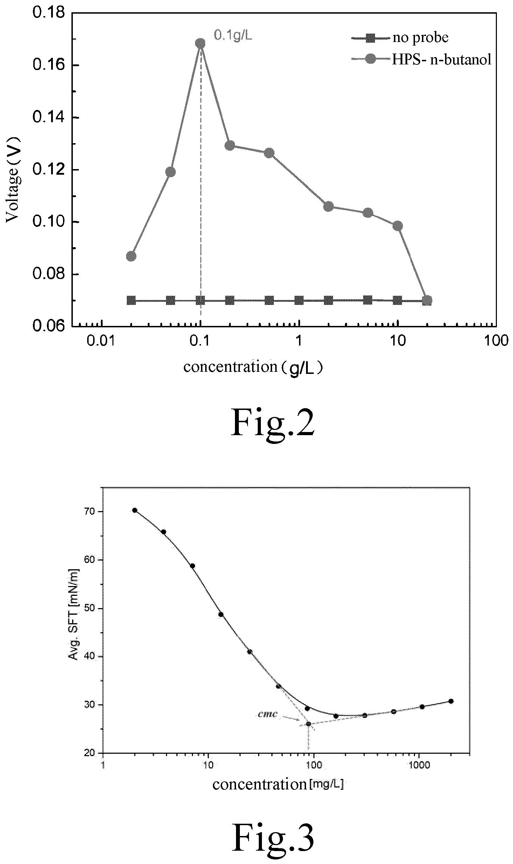

A customized and assembled fluorescence detector (including such optical filters as an exciting optical filter (365 nm), a dichroscope and an emitting optical filter (729 nm); a light source: a peak wavelength of 365 nm, and a wave band 300-400 nm; a working current: 0.02 A; and a working voltage: 5 V) was used to perform fluorescence detection on the above-mentioned solution to be measured added with the HPS probe and to detect the fluorescence intensity according to the brightness of the emitted fluorescence (the luminous intensity was converted into a valid voltage reading). The results of Example 1 and Reference Example 1 are shown in FIG. 2.

### <Determination of CMC of Aqueous Detergent Solution>

FIG. 2 is a diagram representing curves of fluorescence intensities changing with concentration when the AIE fluorescent probe composition of the present invention is added to the above-mentioned directly prepared aqueous solution of the super cleaning detergent (Example 1, marked as black dot in the figure) and when no AIE fluorescent probe composition of the present invention is added (Reference Example 1, marked as black square in the figure).

As could be seen from FIG. 2, when no probe solution was added, the fluorescence intensity of the aqueous detergent solution was extremely low, and the intensity almost had no change with increasing detergent concentration (Reference Example 1).

In contrast, in the aqueous detergent solution added with the probe solution (HPS-n-butanol) of the present invention in Example 1, when the concentration of the aqueous detergent solution was low (lower than the CMC), the fluorescence of a certain intensity was also observed. It was speculated that this was because, after the detergent and the HPS probe molecules were added to the system, driven by the hydrophobic interaction between the alkyl chains of the surfactant in the detergent and the π-π interaction between the HPS molecules, the HPS/surfactant mixture started to be aggregated, which could form an ordered structure or a composite structure, effectively limiting the intramolecular motion and thus exhibiting certain AIE characteristic.

When the concentration of the aqueous detergent solution in the system reached or was higher than the CMC (less than 10 times CMC), a large quantity of surfactant molecules started to be self-assembled to form micelles. At this time, most of the micelles were spherical, and the size and shape of the micelles were roughly unchanged. Driven by the hydrophilic-hydrophobic interaction, oleophilic (hydrophobic) HPS probe molecules were assisted by the auxiliary agent (n-butanol) to enter and be aggregated in the hydrophobic cores of the spherical micelles, and exhibited the AIE characteristic with strong fluorescence intensity within the concentration range of 0.1-2 g/L. The concentration of the solution to be measured corresponding to the peak (the maximum fluorescence intensity) of the curve in FIG. 2 was 0.1 g/L, and therefore, the concentration could be determined as the CMC of the directly prepared aqueous detergent solution.

When the concentration of the aqueous detergent solution in the system was excessively high (e.g., more than 10 times CMC), the fluorescence emission intensity decreased significantly. This could be because excess surfactant solution caused the spherical micelles to form anisotropic aggregates such as wormlike micelles or niosomes; the HPS was distributed into the micelles or aggregates of different shapes; the π-π interaction between the HPS molecules was destroyed; the restriction on the intramolecular motion of the HPS was weakened; and the molecules in the excited state consumed the optical energy in the form of thermal energy through the vibrational-rotational form, resulting in weakened fluorescence of the HPS. It was speculated that this might be due to the influence of anisotropic fluorescence of the HPS probes in the non-spherical micelle aggregate environment, resulting in significantly weakened fluorescence intensity observed by naked eyes.

In addition, the change of the AIE fluorescence intensity of the above-mentioned aqueous solution of the super cleaning detergent could also be identified only by naked eyes. The concentration of the solution to be measured with the strongest fluorescence intensity observed by naked eyes was determined as the CMC, and the observation result was substantially consistent with the above-mentioned measurement result obtained by using the fluorescence detector.

To further verify the accuracy of the CMC measurement result using the AIE fluorescent probe composition of the present invention, K100C surface tension meter was used to measure the CMC of the aqueous solution of the super cleaning detergent used in Example 1, obtaining the curve of surface tension changing with concentration as shown in FIG. 3.

By fitting the changing curve in FIG. 3, the CMC of the directly prepared aqueous solution of the super cleaning detergent was speculated to be approximate to 0.09 g/L, which was close to the measurement result (0.1 g/L) using the AIE fluorescent probe method in the present invention, indicating that the method for measuring a CMC using an AIE fluorescent probe composition in the present invention was feasible and effective.

### (Examples 2-6, Comparative Examples 1-3, and Reference Example 2)

Except that the super whitening detergent A0-A10 (trade name, produced by the Bluemoon company) including the fluorescent whitening agent CBS was used instead of the super cleaning detergent B1-B10 and the components of the AIE fluorescent probe composition were changed as shown in the following Table 2-1 and Table 2-2, solutions to be measured of Examples 2-6 and Comparative Examples 1-3 were directly prepared as the same with Example 1, and measurement was carried out similarly.

Furthermore, except that the probe solution was not added, solutions to be measured of Reference Example 2 were prepared as the same with Example 2 for control. The results are as shown in Table 2-1 and Table 2-2. In the tables, the bold-faced digits in the column regarding the voltage values represented the voltage values corresponding to the maximum fluorescence intensities (peaks).

**Table 2-1:**

| | Reference Example 2 | Example 2 | Example 3 | Example 4 | Example 5 |
|---|---|---|---|---|---|
| Probe Composition | None | HPS-n-but anol | HPS-n-prop anol | HPS-tert-but anol | HPS-isoprop anol |
| Concentration of Super Whitening Detergent A0-A10 (g/L) | Voltage (V) | | | | |
| 0 | 0.0697 | 0.0696 | 0.1587 | 0.1073 | 0.0786 |
| 0.02 | 0.0697 | 0.0757 | 0.2268 | 0.1475 | 0.1485 |
| 0.05 | 0.0697 | 0.0946 | 0.2544 | 0.1478 | 0.1621 |
| 0.1 | 0.0697 | 0.1261 | 0.2546 | 0.1608 | 0.1657 |
| 0.2 | 0.0697 | 0.1584 | 0.2768 | 0.1768 | 0.1795 |
| 0.5 | 0.0697 | 0.1469 | 0.2577 | 0.1753 | 0.1787 |
| 1 | 0.0698 | 0.1436 | 0.2669 | 0.171 | 0.1571 |
| 2 | 0.082 | 0.1472 | 0.2627 | 0.1584 | 0.1645 |
| 5 | 0.0924 | 0.1323 | 0.1927 | 0.1403 | 0.1369 |
| 10 | 0.1017 | 0.1148 | 0.1497 | 0.1132 | 0.1092 |
| 20 | 0.0938 | 0.0945 | 0.1043 | 0.0983 | 0.0944 |

**Table 2-2:**

| | Example 6 | Comparative Example 1 | Comparative Example 2 | Comparative Example 3 |
|---|---|---|---|---|
| Probe Composition | HPS-n-butanol with acetone evaporated completely'* | HPS-aminomet hylacetone | HPS-n-butanol: acetone=6:4 | HPS-acetone³ * |
| Concentration of Super Whitening Detergent A0-A10 (g/L) | Voltage (V) | | | |
| 0 | 0.0694 | 0.0698 | 0.0699 | -²* |
| 0.02 | -²* | 0.0732 | 0.071 | 0.1775 |
| 0.05 | 0.1123 | 0.0719 | 0.0813 | 0.1947 |
| 0.1 | 0.2508 | 0.0699 | **0.1293** | 0.2672 |
| 0.2 | **0.2947** | 0.0699 | 0.1181 | **0.3275** |
| 0.5 | 0.2221 | 0.0744 | 0.1505 | 0.2948 |
| 1 | 0.2537 | 0.0751 | 0.1459 | 0.2538 |
| 2 | 0.2004 | 0.0885 | **0.1834** | 0.1807 |
| 5 | 0.1725 | 0.0963 | 0.1293 | 0.1269 |
| 10 | 0.1186 | 0.0952 | 0.1037 | 0.1057 |
| 20 | 0.0892 | 0.0871 | 0.1006 | 0.0923 |

| | | | | |
|---|---|---|---|---|
| Notes: 1* "HPS-n-butanol with acetone evaporated completely" represents that the HPS was firstly dissolved into acetone and n-butanol was added thereto after the acetone was evaporated completely. 2* "-" in the table represents that measurement was not performed. 3* represents that the measurement result was obtained after the acetone was evaporated completely. | | | | |

As could be seen from Table 2-1 and Table 2-2, in the Examples 2-6 of the present invention, although different auxiliary agent types were used, all the concentrations of the solutions to be measured corresponding to the maximum fluorescence intensities were 0.2 g/L, and therefore, the concentration could be determined as the CMC of the directly prepared aqueous solution of the super whitening detergent. Thus, as shown in Example 6, in the case that the HPS was pre-dissolved into the acetone and the n-butanol was added thereto after the acetone was evaporated completely, stable and significant AIE phenomenon also occurred within an appropriate concentration range, and the maximum fluorescence intensity was exhibited in the vicinity of the CMC.

In contrast, the number of carbon atoms of the alkyl chain in the auxiliary agent molecule (aminomethylacetone) used in the Comparative Example 1 did not meet the requirement of the general formula (1) in the present invention, and therefore, no significant AIE phenomenon was exhibited within the concentration range of 0-20 g/L.

The mixed solvent of n-butanol and acetone was used in the Comparative Example 2. However, the acetone itself did not meet the requirement of the general formula (1) in the present invention, and due to the uncertain evaporation degree of the acetone in the mixed solvent, the changing trend of the luminous intensity of the solution to be measured was unstable so that the CMC could not be measured accurately. This result indicated that if the volatile solvent in the probe solution was not evaporated completely, the measurement result could be inaccurate.

The acetone was directly used as the auxiliary agent in the Comparative Example 3, and the measurement was performed after the acetone was evaporated completely. From the experimental result, while significant AIE phenomenon was exhibited after the acetone was evaporated completely, no stable probe solution could be prepared because the acetone was highly volatile, and it was necessary to wait for the evaporation of the solvent during measurement. Therefore, the solution was not suitable for use as the probe solution in the present invention and excluded from the scope of the present invention to become the comparative example.

### (Example 7)

### <Preparation of Aqueous Detergent Solution for Actual Machine Washing>

2.5 kg of clothes were added to a cylinder washing machine, and 13 L of water and 1 g of the super cleaning detergent BO-B10 (trade name, produced by the Bluemoon company) were added thereto and mixed. A certain amount of detergent was continuously supplemented in the washing process of the washing machine such that the usage amounts of the detergent added to 13 L of water were 1 g, 2 g, 4 g, 8 g, 12 g, 16 g, 20 g, 24 g, 28 g, and 32 g, respectively, and the corresponding concentrations of the super cleaning detergent were 0.075g/L, 0.15g/L, 0.31g/L, 0.62g/L, 0.92g/L, 1.23g/L, 1.54g/L, 1.85g/L, 2.15g/L, and 2.46g/L, respectively. A series of aqueous detergent solutions for actual machine washing having different detergent concentrations were taken out of the cylinder washing machine in sequence as the solutions to be measured.

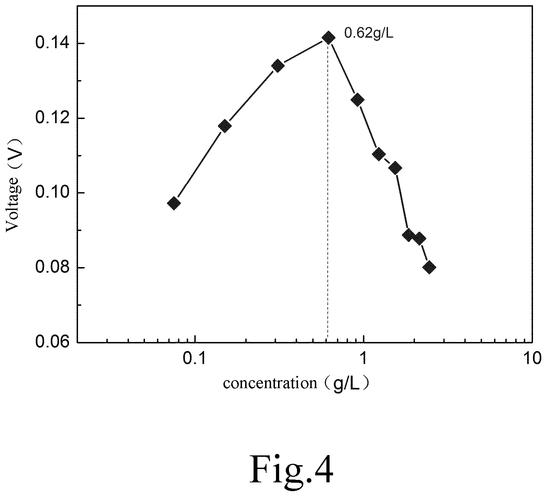

In Example 7, except that the above-mentioned aqueous detergent solution for actual machine washing was used instead of the directly prepared aqueous detergent solution used in Example 1, the measurement of the fluorescence intensity was performed the same with Example 1, with the results being shown in FIG. 4. FIG. 4 is a diagram representing a curve of fluorescence intensity changing with concentration when the AIE fluorescent probe composition (HPS-n-butanol) of the present invention is added to an aqueous solution of a super cleaning detergent for actual machine washing.

As shown in FIG. 4, identical to the changing trend of FIG. 2, as the detergent concentrations in the aqueous detergent solutions increased gradually, the fluorescence intensities of the aqueous detergent solutions had an abrupt change from low to high, and gradually decreased after reaching the maximum fluorescence intensity. However, unlike FIG. 2, the concentration of the aqueous detergent solution corresponding to the peak (the maximum fluorescence intensity) occurring in the curve was 0.62 g/L.

It thus could be determined that in the usage scenario shown in Example 7, the CMC of the aqueous detergent solution for actual machine washing was 0.62 g/L. The CMC was higher than the CMC measured using the directly prepared aqueous detergent solution in Example 1. This was because there were a lot of clothes in the aqueous detergent solution for actual machine washing, which adsorbed the detergent to a certain extent, resulting in increased apparent CMC, and this result was reasonable.

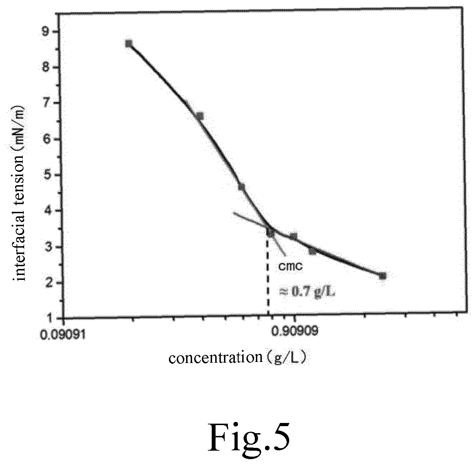

To further verify the accuracy of the CMC measurement result using the AIE fluorescent probe composition of the present invention, K100C surface tension meter was used to measure the CMC of the aqueous solution of the super cleaning detergent for actual machine washing used in Example 7, obtaining the curve of interfacial tension changing with concentration as shown in FIG. 5.

By fitting the changing curve in FIG. 5, the CMC of the aqueous solution of the super cleaning detergent for actual machine washing was speculated to be approximate to 0.7g/L, which was close to the measurement result (0.62 g/L) using the AIE fluorescent probe method in the present invention, indicating that the method for measuring a CMC using an AIE fluorescent probe composition in the present invention was feasible and effective.

From the results of the above Examples 1-7, the AIE fluorescent probe composition of the present invention may be formed into a stable probe solution and is applicable to both of the directly prepared aqueous detergent solution or the aqueous detergent solution used in actual machine washing. Moreover, the interference of the fluorescent whitening agent in the aqueous detergent solution can be avoided, and the AIE characteristic is exhibited within an appropriate CMC concentration range. Therefore, the AIE fluorescent probe composition can be applied to practical uses, e.g., to washing equipment, so as to measure the CMC of the aqueous detergent solution accurately and conveniently.

### Industrial Availability

By using the AIE fluorescent probe composition of the present invention, online measurement and online determination of the CMC of a surfactant solution can be realized only by using a simply assembled fluorescence detector within the range of the ultraviolet visible light without a high-accuracy testing instrument. Thus the AIE fluorescent probe composition is convenient for industrialization and is of great significance especially in the smart detergent adding system of washing equipment.

## Claims

1. An aggregation-induced emission (AIE) fluorescent probe composition, which is a probe solution for measuring a critical micelle concentration (CMC) of a surfactant solution, **characterized in that** the AIE fluorescent probe composition comprises a probe compound and an auxiliary agent, wherein the probe compound is a hydrophobic AIE molecule, and the auxiliary agent is at least one organic solvent expressed by the following general formula (1):
(R)ₙ-X (1)
wherein R is a substituted or unsubstituted linear or branched alkyl group having 3-10 carbon atoms; n is an integer of 1 or 2, and when n is 2, two R groups can be the same or different; and
X is any polar group selected from hydroxyl, amino, cyano, halogen, acylamino, carbonyl, aldehyde, ester, and ether groups.

2. The AIE fluorescent probe composition according to claim 1 or 2, wherein a boiling point of the auxiliary agent is above 70°C.

3. The AIE fluorescent probe composition according to claim 1 or 2, wherein in the general formula (1), R is an unsubstituted linear or branched alkyl group having 3-6 carbon atoms, and X is selected from hydroxyl or amino group.

4. The AIE fluorescent probe composition according to claim 1 or 2, wherein the auxiliary agent is one or more organic solvents selected from n-propanol, isopropanol, tert-butanol, n-butanol, n-butylamine, and pentylamine.

5. The AIE fluorescent probe composition according to claim 1 or 2, wherein the auxiliary agent has an amphipathic structure and has in a molecule thereof a hydrophilic region formed by the polar group and a hydrophobic region formed by the alkyl group; and the probe compound has a higher solubility in the auxiliary agent than in water.

6. The AIE fluorescent probe composition according to claim 1 or 2, wherein
the auxiliary agent is an alkyl alcohol having 3-6 carbon atoms; and the probe solution is prepared by: pre-dissolving the probe compound in acetone, then evaporating the acetone completely, and finally adding the alkyl alcohol thereto, thereby obtaining the AIE fluorescent probe composition.

7. The AIE fluorescent probe composition according to claim 1 or 2, wherein the probe compound comprises a hydrophobic AIE molecule having a compound expressed by any of the following chemical formulas 1-12 as a basic skeleton:

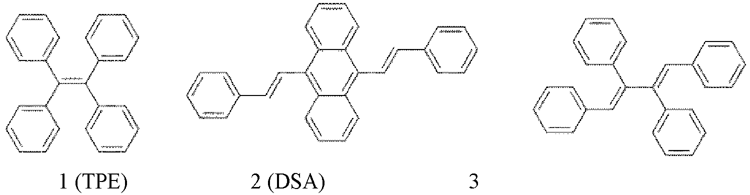

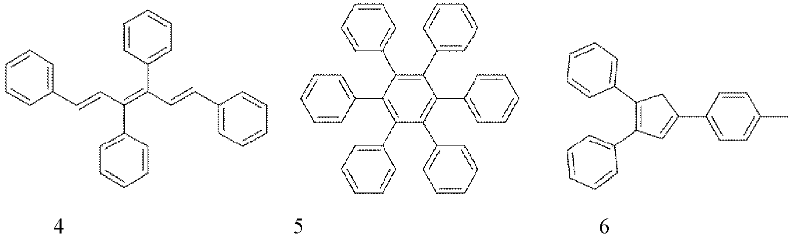

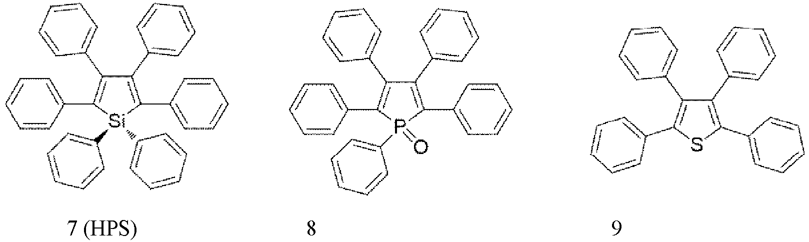

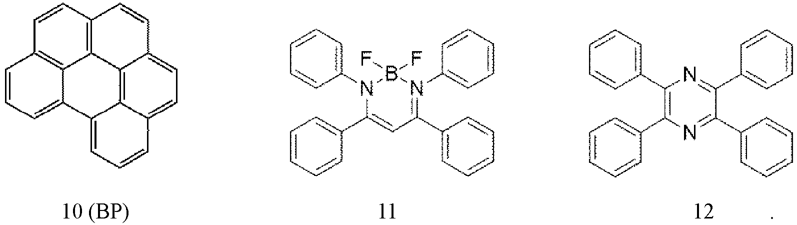

8. The AIE fluorescent probe composition according to claim 7, wherein
the hydrophobic AIE molecule is unsubstituted tetraphenylethylene (TPE) expressed by the chemical formula 1, unsubstituted distyrenylanthracene (DSA) expressed by the chemical formula 2, unsubstituted hexaphenylsilole (HPS) expressed by the chemical formula 7, or unsubstituted 1,12-benzoperylene (BP) expressed by the chemical formula 10.

9. The AIE fluorescent probe composition according to claim 1 or 2, wherein
the surfactant solution contains at least an anionic surfactant and/or a nonionic surfactant.

10. The AIE fluorescent probe composition according to claim 1 or 2, wherein
a concentration of the probe compound in the AIE fluorescent probe composition is 500-2000 µmol/L, and a concentration of the probe compound in the surfactant solution is 1-1000 µmol/L.

11. The AIE fluorescent probe composition according to claim 1 or 2, wherein a proportion of the auxiliary agent in the whole AIE fluorescent probe composition is 70 mass % to 99 mass %, and a proportion of the probe compound in the whole AIE fluorescent probe composition is 1 mass % to 30 mass %.

12. A method for measuring a CMC of a surfactant solution, comprising the following sequential steps:
a solution preparation step: preparing a series of surfactant solutions to be measured having increasing concentrations in a plurality of sample pools,
a probe addition step: adding a certain amount of probe solution to each of the plurality of sample pools,
a detection step: detecting a fluorescence intensity of each solution to be measured using a detection means, and
a decision step: deciding the CMC of the surfactant solution according to a changing trend of the detected fluorescence intensities of the solutions to be measured,
**characterized in that** the probe solution is the AIE fluorescent probe composition according to any one of claims 1-11.

13. The method for measuring a CMC according to claim 12, wherein the probe compound is unsubstituted hexaphenylsilole (HPS);
in the detection step, the fluorescence intensities of the solutions to be measured in the plurality of sample pools have an abrupt change from low to high, and gradually decrease after reaching a maximum fluorescence intensity; and
in the decision step, the concentration of the solution to be measured in the sample pool corresponding to the detected maximum fluorescence intensity is taken as the CMC of the surfactant solution.

14. A device for measuring a CMC of a surfactant solution, comprising:
a plurality of sample pools in which a series of surfactant solutions to be measured having increasing concentrations were prepared,
a probe container in which a probe solution containing a probe compound is held,
a sample adding means configured to take a certain amount of probe solution out of the probe container for adding to the plurality of sample pools,
a detection means configured to detect fluorescence intensities of the solutions to be measured in the plurality of sample pools, and
a decision means configured to decide the CMC of the surfactant solution according to a changing trend of the fluorescence intensities of the solutions to be measured detected by the detection means,
**characterized in that** the probe solution is the AIE fluorescent probe composition according to any one of claims 1-11.

15. A method for CMC determination based on an AIE fluorescent probe, which is a method for determining whether a surfactant solution reaches a critical micelle concentration (CMC), **characterized in that** the method comprises the following steps:
a solution preparation step: preparing a solution to be measured by adding an initial amount of surfactant to water and mixing;
a sampling step: transferring a small amount of the solution to be measured to the sample pool;
a probe addition step: adding the AIE fluorescent probe to the sample pool, and applying slight vibration to form a mixed solution;
a detection step: detecting a fluorescence intensity of the mixed solution by means of a fluorescence detector, and outputting a detection signal S; and
a determination step: determining whether the CMC is reached according to a changing trend of the detection signal S; if the determination result is yes, outputting the concentration of the solution to be measured as the CMC, and finishing all the steps; and if the determination result is no, emptying the sample pool, returning to the solution preparation step, supplementing a specified amount of surfactant to the solution to be measured, and continuously performing the subsequent sampling step, probe addition step, detection step, and determination step;
wherein in the determination step, if the determination result is no, but the number of times of supplementing the specified amount of surfactant in the solution preparation step has reached a predetermined threshold, all the steps are finished.

16. The method for CMC determination according to claim 15, wherein the AIE fluorescent probe is the AIE fluorescent probe composition according to any one of claims 1-11.

17. The method for CMC determination according to claim 15, wherein
in the determination step, if the detection signal S is equal to or higher than a preset threshold S₀, the determination result is yes; and if the detection signal S is lower than the threshold S₀, the determination result is no.

18. The method for CMC determination according to claim 15, wherein in the determination step, if a difference S_{Y}-S_{X} between the latter S_{Y} and the former S_{X} of the detection signals obtained by two adjacent detection steps is 0 or becomes a negative value, the determination result is yes; and if the difference S_{Y}-S_{X} is greater than 0, the determination result is no.

19. A device for CMC determination based on an AIE fluorescent probe, which is a device for determining whether a surfactant solution reaches a critical micelle concentration (CMC), comprising a surfactant storage means, an addition means, a sampling means, a sample pool, an AIE fluorescent probe storage means, a sample adding means, a detection means, a CMC determination means, and a decision means, wherein the following operations are performed in sequence:
the addition means takes a certain amount of surfactant out of the surfactant storage means and mixes the surfactant with water to form a solution to be measured;
the sampling means transfers a small amount of the solution to be measured to the sample pool;
the sample adding means takes a trace amount of probe solution out of the AIE fluorescent probe storage means for adding to the sample pool, and applies slight vibration to form a mixed solution;
the detection means detects a fluorescence intensity of the mixed solution and transmits an obtained detection signal to the CMC determination means;
the CMC determination means determines whether the CMC is reached according to a changing trend of the detection signal;
if the determination result of the CMC determination means is yes, the decision means outputs the concentration of the solution to be measured as the CMC, and all the operations are finished;
if the determination result of the CMC determination means is no and the number of execution times of the addition means is less than a predetermined threshold, the sample pool is emptied, and the addition means supplements a specified amount of surfactant to the solution to be measured, and the subsequent operations are performed continuously; and
if the determination result of the CMC determination means is no and the number of execution times of the addition means has reached the predetermined threshold, all the operations are finished.

20. The device for CMC determination according to claim 19, wherein the AIE fluorescent probe is the AIE fluorescent probe composition according to any one of claims 1-11.
